# EUROPEAN PATENT APPLICATION

(11) **EP 0 551 514 A1**
(43) Date of publication of application: **21.07.1993**
(21) Application number: 91908473.1
(22) Date of filing: 17.04.1991
(51) Int. Cl.: G06F 3/00, G06F 15/78, G06F 1/00

(54) **PERSONAL COMPUTER**

(30) Priority: 17.04.1990 JP 101150/90
(71) Applicant: SEIKO EPSON CORPORATION, Shinjuku-ku Tokyo 163 (JP)
(72) Inventor: TAKEDA, Kouji Seiko Epson Corp. 3-5, Owa 3-chome, Nagano 392 (JP)
(74) Representative: Brown, Kenneth Richard
(86) International application number: JP9100512
(87) International publication number: WO9116676

(57) **Abstract**

A personal computer characterized in that a CPU board comprising a central processing unit and a main memory, and an IO board comprising a serial interface and an FDD interface are provided in separate modules. Since the CPU board is operated by a high-speed clock and the IO board is operated by a low-speed clock, a timing conversion circuit is provided between the boards. Thereby, the CPU board and the IO board can be designed and developed separately and new products can be designed simply by changing the combination of the boards. Also, it is easy that only the CPU board is shielded electromagnetically.

## Description

### Technical Field

The present invention relates to module formation of a personal computer circuit board and, more particularly, allows an efficient, short-term development of several types of personal computers such that a CPU board and an IO board are designed as separate modules, and a common IO board is used while different CPU boards are designed for different CPUs.

### Background Art

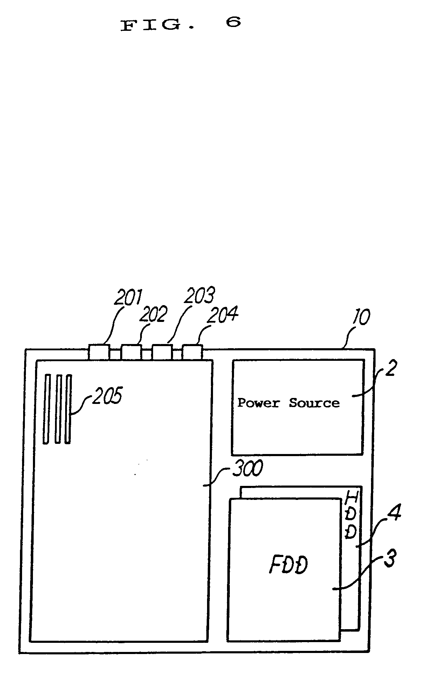

An example of a conventional personal computer is shown in Fig. 6. Internal units when viewed from the top of a personal computer main body 10 are shown. The personal computer main body 10 has a power source 2, an FDD (Floppy disk drive) 3, and an HDD (Hard disk drive) 4. A main board 300 is mounted with a CPU (Central processing unit), a socket for extending a numeric operation coprocessor (NPX), a ROM (Read only memory) for storing a BIOS (Basic input output system), i.e., basic input/output programs, a main memory, an extended memory connector, a parallel interface (PIF), a serial interface (SIF), a keyboard interface (KIF), a mouse interface (MIF), an FDD interface (FIF), an HDD interface (HIF), a real-time clock (RTC), a DMA controller, an interrupt controller, a timer, and the like.

A mouse is connected to a mouse interface connector 201, a keyboard is connected to a keyboard interface connector 202, and a modem or the like is connected to a serial interface connector 203. A printer or the like is connected to a parallel interface connector 204. An optional connector 205 is also called an optional slot to which various types of extension boards can be connected. A maximum of three extension boards can be connected to the personal computer 10. Each extension board is defined as a board for providing a function in addition to the functions of the main board 300. The extension boards include a video board and a LAN (Local area network) board.

As shown in Fig. 6, all circuits are mounted on the single main board 300 of the conventional personal computer. In other words, all personal computer functions are realized by a single board. In some of personal computers, some functions (e.g., a video board, a PIF, an FIF, an SIF, and a main memory) are extracted and realized by a small separate board. In this case, however, most of the functions are realized on the main board 300, and the main board is very large. Some functions are realized by a separate board in a conventional personal computer to solve a mounting problem in terms of a limited mounting space, and all functions are to be mounted on a single board. However, due to the limitation of the size of the main board 300, some functions must be realized on a separate board.

In recent years, personal computer techniques have been remarkably developed. In particular, CPUs can be operated at higher speeds, and access speeds of memories are greatly increased. More advanced CPUs have been sequentially introduced on the market. Under these circumstances, personal computer manufacturers must develop more advanced new models every year to match with the developments of techniques. In a conventional design concept, the main board 300 in Fig. 6 must be redesigned to match with a high-speed CPU, a high-speed memory, and a new CPU. A large number of development steps are required to redesign the main board 300 and become a heavy burden on the manufacturers. It takes a long development time to design a large main board. When a new product is finished, the state-of-the-art techniques are more advanced than the technical level of this new product. The competitive power of the new product on the market is weakened, which leads to decisive damage to the manufacturers. The development cycle of a new product is very short due to rapid technical developments of recent personal computers. When a new model is introduced on the market, the old model (i.e., a product sold on the market so far) cannot be sold and is kept in a storehouse. A main board for such a product is of no use, thus resulting in a large loss. In this case, a power source, an FDD, an HDD and like except for the main board can be reused in a new model.

As described above, since only the single main board 300 is used in the conventional personal computer in Fig. 6 and the main board 300 must be entirely redesigned in accordance with technical developments such as developments of high-speed CPUs and high-speed memories, the number of development steps is increased, the development period is prolonged, and a risk caused by products in stock occurs.

### Disclosure of Invention

It is an object of the present invention to solve the conventional problems described above, so that a personal computer can be efficiently developed within a short period of time, and for this purpose, a main board is divided into two modules.

A technique for simply constituting a main board by two boards is present in a conventional technique as described with reference to the "Prior Art". A method of dividing a main board, which is different from the conventional technique, is a characteristic feature of the present invention. The method of dividing the main board is summarized as follows. The main board is divided into two parts, i.e., (1) a part which is not greatly influenced by technical developments, has as its primary concern compatibility with conventional products, and has almost the same function and speed as those of the conventional part (mainly, a part associated with an I/O), and (2) a portion which can maximally match with technical developments and must be redesigned every time a new model is developed (mainly a portion associated with a CPU and a memory).

More specifically, according to the present invention, there is provided a personal computer having a central processing unit (CPU), an NPX socket for inserting a numeric operation coprocessor, a ROM for storing a basic input/output program, a RAM functioned as a main memory, an extended memory connector for extending this main memory, a parallel interface to which an external printer can be connected, a serial interface to which an external modem can be connected, a keyboard interface to which an external keyboard can be connected, an FDD interface for controlling a floppy disk drive unit, and an optional connector for inserting an optional board for extending a function, characterized in that a CPU board including the CPU, the ROM, the RAM, the NPX socket, and the extended memory connector, and an IO board including the parallel interface, the serial interface, the keyboard interface, the FDD interface, and the optional connector are constituted by separate boards, the CPU board and the IO board are connected through a board connector, the central processing unit on the CPU board, the numeric operation coprocessor inserted into the NPX socket, the RAM, an extended memory inserted into the extended memory connector are operation in synchronism with a CPU clock, the parallel interface, the serial interface, the keyboard interface, the FDD interface, which interfaces are mounted on the IO board, and the optional board inserted into the optional connector are controlled by an address signal, a data signal, and a control signal which are synchronized with an IO clock having a speed lower than that of the CPU clock, and the CPU board has a timing converter for converting timings of the address, data, and control signals from the central processing unit, which are output in synchronism with the CPU clock, into address, data, and control signals synchronized with the IO clock, thereby outputting the address, data, and control signals synchronized with the IO clock to the board connector.

### Brief Description of Drawings

Fig. 1(A) is a view showing an embodiment of a personal computer according to the present invention;
Figs. 1(B) and 1(C) are views for explaining a CPU board and an IO board in the personal computer;
Fig. 2(A) is a view for explaining a detailed arrangement of a main part of the personal computer shown in Fig. 1(C);
Figs. 2(B) and 2(C) are views showing an operation of this personal computer;
Fig. 3 is a view showing the second embodiment of the present invention, and particularly, showing a system including a CPU board having compatibility between two or more types of personal computers having cases having different sizes;
Fig. 4 is a view (shield and heat radiation) associated with the third embodiment of the present invention;
Fig. 5 is a view (CPU cartridge) associated with the fourth embodiment of the present invention; and
Fig. 6 is a view showing an example of a conventional personal computer.

### Best Mode of Carrying out the Invention

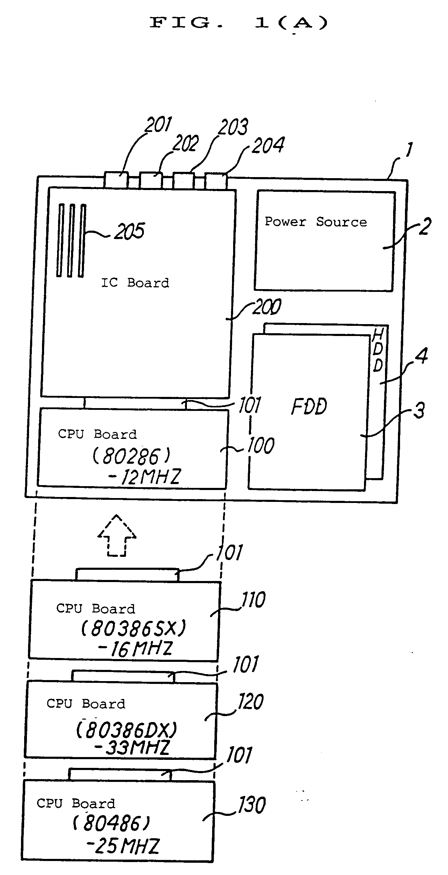

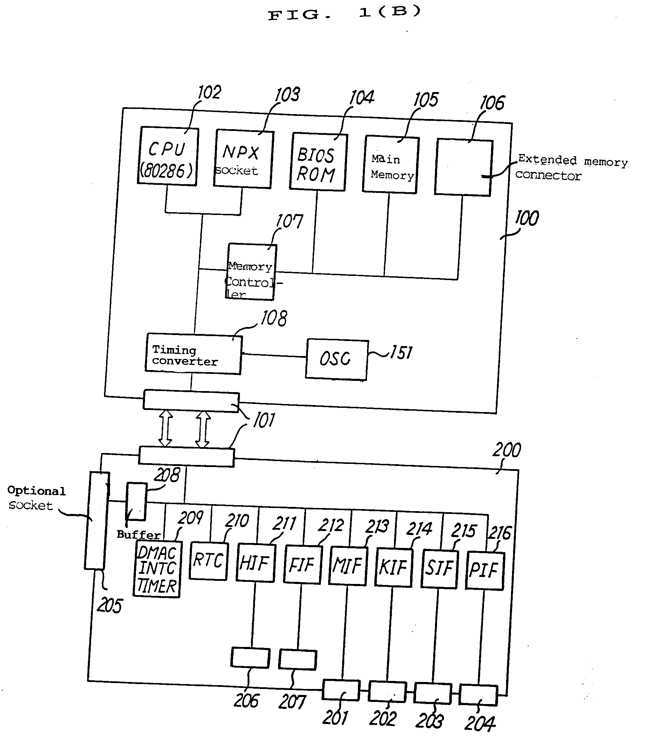

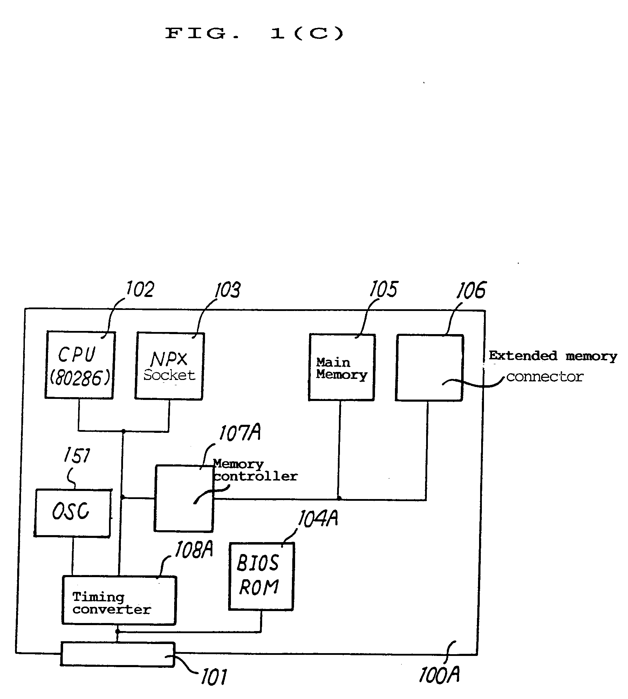

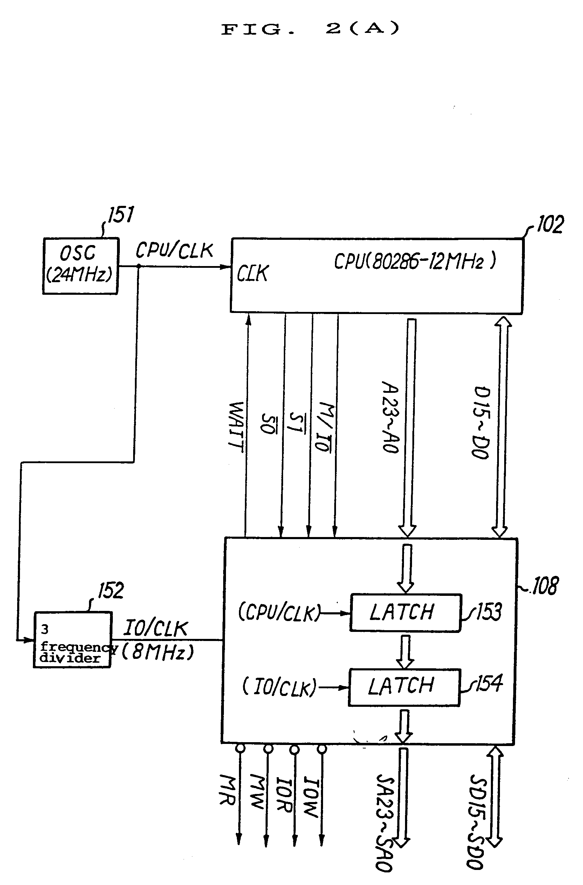

Fig. 1(A) shows an embodiment of a personal computer according to the present invention. A personal computer main body 1 has the same functions as those of the conventional personal computer 10 in Fig. 6. A power source 2, an FDD 3, and an HDD 4 are also identical to those in Fig. 6. A difference between the arrangements of Fig. 1(A) and Fig. 6 is that the main board 300 in Fig. 6 is divided into two boards 100 and 200 in Fig. 1(A). In addition to a CPU, a memory and the like are mounted on the CPU board 100. A serial interface, a parallel interface, and the like are mounted on the IO board 200. A board connector 101 connects the CPU board to the IO board 200. A mouse interface connector 201, a keyboard interface connector 202, a serial interface connector 203, a parallel interface connector 204, and an optional connector 205 are identical to those in Fig. 6.

A sum of functions of the CPU board 100 and the IO board 200 in Fig. 1(A) is the same as a sum of functions of the main board 300 in Fig. 6. In this sense, a personal computer 1 in Fig. 1(A) is functionally identical to the personal computer in Fig. 6. Only the difference between these computers is that the conventional board is divided into two boards in this embodiment. A method of dividing the single board is the characteristic feature of the present invention, which will be subsequently described below and which leads to many advantages.

In the present invention, each of the CPU board 100 and the IO board 200 is described to be constituted by a single board. In practice, however, a portion corresponding to the CPU board may be physically constituted by two or more boards. A portion corresponding to the IO board may be physically constituted by two or more boards. If these portions are defined as a CPU board group and an IO board group, and if devices of the present invention are divided into the CPU and IO board groups in accordance with the division method of the present invention, the effect of the present invention can be maintained.

A block diagram for explaining a method of dividing a board into the CPU board 100 and the IO board 200 in Fig. 1(A) is shown in Fig. 1(B). In addition to a CPU 102 (this CPU comprises an intel 80286-12 MHz in this embodiment), the CPU board 100 includes a socket 103 for inserting a numeric operation coprocessor (an intel 80287 in this embodiment), a ROM 104 for storing a BIOS, a main memory 105 constituted by a DRAM (Dynamic random access memory), and an extended memory connector 106 for extending the main memory. The CPU board 100 also includes a clock oscillator (OSC) 151 for outputting a clock signal. Since the CPU 102 is an 80286 of the 12-MHz version, it is operated at 12 MHz. A memory controller 107 controls the ROM 104, the main memory 105, and an extended memory connected to the connector 106. Access from the CPU 102 to a memory is preferably performed at a higher speed. The memory controller 107 converts 12-Mhz address, data, and control signals output from the CPU 102 into appropriate ROM and RAM signals (the timing is kept unchanged at 12 MHz), and the converted signals are supplied to the ROM and the RAM. That is, elements on the CPU board 100 are operated almost in synchronism with a 12-MHz clock as the fundamental block of the CPU 102.

A CPU board 110, 120, or 130 in Fig. 1(A) can be connected to the IO board 200 in place of the CPU board 100. Board connectors 101 of these CPU boards are identical to and compatible with each other. A CPU on the CPU board 110 is an intel 80386SX of the 16-MHz version. A CPU on the CPU board 120 is an intel 80386DX of the 33-MHz version. A CPU on the CPU board 130 is an intel 80486 of the 25-MHz version. A main memory, an extended memory connector, and a memory controller are also mounted on each of the CPU boards 110, 120, and 130. The main memory and the extended memory are operated in synchronism with the corresponding CPU clock. That is, the memories on the CPU board 110 are operated at 16 MHz, the memories on the CPU board 120 are operated at 33 MHz, and the memories on the CPU board 130 are operated at 25 MHz. Although the detailed block diagrams of the CPU boards 110, 120, and 130 are not illustrated, the arrangements are substantially the same as the CPU board 100 in Fig. 1(B) or the CPU board 100A in Fig. 1(C). These arrangements are identical to each other except that the CPU and the coprocessor are different in units of CPU boards, and that the memory controller schemes are different in unite of CPU boards.

A CPU clock frequency f_{CPU} is increased year by year along with the technical developments. The operations of memory elements, let alone the DRAM, are performed at a higher speed accordingly. In addition, since a memory control scheme such as a page interleaved scheme or a cache scheme is used, a main memory can be operated at the same speed as the CPU clock along with developments of higher-speed memory elements and developments of memory control techniques. By these techniques, the memories on the CPU board can be operated in synchronism with the CPU clock. The timing converter 108 converts timings of the address, data, and control signals output from the CPU, and outputs the converted signals to the board connector 101. All signals output from the CPU are high-speed signals synchronized with the 12-MHz CPU clock. These high-speed signals are converted into a low-speed IO clock f_{IO} = 6 MHz, and the low-speed signals are output to the board connector 101. All address, data, and control signals output to the board connector 101 are signals synchronized with the low-speed IO clock (6 MHz). Although almost all the internal circuits on the CPU board 100 are operated in synchronism with the high-speed CPU clock (12 MHz), all signals at the board connector 101 as its output are signals synchronized with the low-speed IO clock (6 MHz). When a circuit constituted by a single board is formed by two boards, a circuit operation tends to be unstable. According to the present invention, however, all output signals at the outputs of the two boards are converted into low-speed signals, thereby solving this problem.

Timing converters identical to the converter 108 are respectively mounted on the CPU boards 110, 120, and 130 to synchronize the board connector signals with the low-speed clock. Almost all the internal circuits on the CPU board 110 are operated at 16 MHz, but all board connector signals are 8-MHz signals. Almost all the internal circuits on the CPU board 120 are operated at 33 MHz, but all board connector signals are 8.3-MHz signals. Almost all the internal circuits on the CPU board 130 are operated at 25 MHz, but all board connector signals are 8.3-MHz signals.

The IO board 200 will be described below. A controller 209 includes a DMA controller (intel 8237), an interrupt controller (intel 8259), a timer (intel 8254), and the like. Reference numeral 210 denotes a real-time clock. An HDD interface 211 is connected to an HDD 4 (Fig. 1(A)) by a cable through an HDD interface connector 206. An FDD interface 212 is connected to an FDD 3 (Fig. 1(A)) by a cable through an FDD interface connector 207. A mouse interface 213 is connected to a mouse outside the personal computer main body 1 through a mouse interface connector 201. A keyboard interface 214 is connected to a keyboard outside the personal computer main body 1 through a keyboard interface connector 202. A serial interface 215 is connected to a model or the like outside the personal computer main body 1 through a serial interface connector 203. A parallel interface 216 is connected to a printer or the like outside the personal computer main body 1 through a parallel interface connector 204. The connectors 206 and 207 are mounted inside the main body 1, and the connectors 201, 202, 203, and 204 extend outside the main body 1. A buffer 208 buffers low-speed address, data, and control signals sent from the CPU board 100 through the board connector 101 and outputs them to the optional connector 205. An extension board (to be also called an optional board) is inserted into an optional slot 205.

The address, data, and control signals sent from the timing converter 108 in the CPU board 100 to the IO board 200 through the board connector 101 are signals synchronized with the IO clock (6 MHz) lower than the CPU clock (12 MHz). The controller, the interface circuits 209 to 216, and the extension board inserted into the optional connector 205 are controlled by low-speed signals synchronized with the IO clock. That is, all the circuits on the IO board 200 are operated in synchronism with the low-speed IO clock.

Since the circuits on the IO board 200 are almost associated with input/output devices, these circuits cannot be operated or need not be operated at high speed in a conventional arrangement due to the following reason. The frequency of access from the CPU to each IO device is much lower than that from the CPU to a memory. Even if access to an IO is performed at a considerably low speed, it does not adversely affect the overall performance of the personal computer (however, a high-speed operation is expected to be required for the HIF 211). The IO board 200 can be operated in synchronism with IO clocks of 6 to 10 MHz and cannot be operated in response to an IO clock of 10 MHz or more. That is, the address, data, and control signals output from the CPU board 100 to the board connector 101 must be signals synchronized with the IO clock of 6 to 10 MHz.

Developments of high-speed CPUs and high-speed memories are increasing year by year, and the frequency of a CPU clock is increased accordingly. In this sense, a CPU board is operated at a higher speed. On the contrary, a high-speed IO device is not positively developed as compared with the development of the CPU board. Since conventional low-speed units associated with IO devices (including an extension board) can be used without any modifications, high-speed units are not developed while compatibility with the conventional arrangements is kept maintained. That is, in personal computers, although the frequency of the CPU clock is increased from 8 to 10, 12, 16, 20, 25, and 33 MHz, the IO clock is kept at a low frequency (in the range of 6 to 10 MHz). In addition, the specifications of the existing personal computers are standardized by the respective manufacturers. Even if personal computer manufacturers develop new products, most of the parts, and particularly the IO board 200 in Fig. 1(B) are kept unchanged. Parts to be changed are associated with almost the CPU (including a change in clock frequency) and the memories. When a new product is designed, the IO board 200 which need not be changed in design is formed by a single board and this single board is commonly used in all new models. When only the CPU board 100 is redesigned every time a new product is designed, thus providing a remarkable effect in terms of reduction in the number of development steps and the development time, which is the main gist of the present invention.

Conventionally, each personal computer manufacturer designs the entire main board (the main board 300 in Fig. 6) in the following cases. That is, the present CPU clock is replaced with a higher-speed CPU clock, the type of CPU is changed, a memory capacity is increased, the present memory element is replaced with the most advanced memory element (e.g., a 1-Mbit DRAM is replaced with a 4-Mbit DRAM), or some functions are added. When personal computer techniques have been rapidly developed, and the number of new products developed by manufacturers is increasing year by year, the conventional method of designing the entire main board poses problems on the number of development steps and the development period. The specifications of new products are considerably standardized by the respective personal computer manufacturers, and main parts can be commonly used. According to the present invention, portions having standard functions and perfectly serving as common parts in all models are extracted as many as possible, and these portions are constituted by a single board as an 10 board. Portions included in the IO board are only low-speed components. Portions except for the IO board (i.e., these portions are a CPU and memories) are constituted by a single board as a CPU board. When a board is divided into two boards, a problem may be posed on operational stability as compared with the single board. However, signals for the connector for connecting these two boards are low-speed signals (address, data, and control signals) synchronized with the low-speed IO clock (6 to 10 MHz), thereby solving the above problem. A timing converter is arranged on the CPU board, address, data, and control signals synchronized with the high-speed CPU clock are converted into signals synchronized with the low-speed IO clock.

With the above arrangement, only a CPU board needs to be developed in order to develop a new product. In the embodiment shown in Fig. 1(A), the CPU board is about 1/3 the entire board, the number of development steps can be reduced to 1/3 that of the conventional case, and the development time can be reduced to a half or less.

As shown in Fig. 1(A), the IO board 200 can be connected to any one of the CPU board 100 (the CPU is an 80286, 12 MHz), the CPU board 110 (the CPU is an 80386SX, 16 MHz), the CPU board 120 (the CPU is an 80386DX, 33 MHz), and the CPU board 130 (the CPU is an 80486, 25 MHz) and can be operated therewith. A user can freely select a CPU board in accordance with a relationship between cost and performance.

Fig. 1(C) shows still another embodiment of the CPU board 100 in Fig. 1(B). The embodiment in Fig. 1(C) is substantially the same as the CPU board 100 in Fig. 1(B) except that a BIOS-ROM 104A is not a memory controller 107A, and converted signals output from a timing converter 108A (i.e., low-speed address, data, and control signals synchronized with the IO clock) are connected, and other arrangements of this embodiment are the same as those in Fig. 1(B). When a BIOS-ROM 104A comprises a low-speed ROM, it is not connected to a memory controller, but the arrangement of this embodiment is obtained.

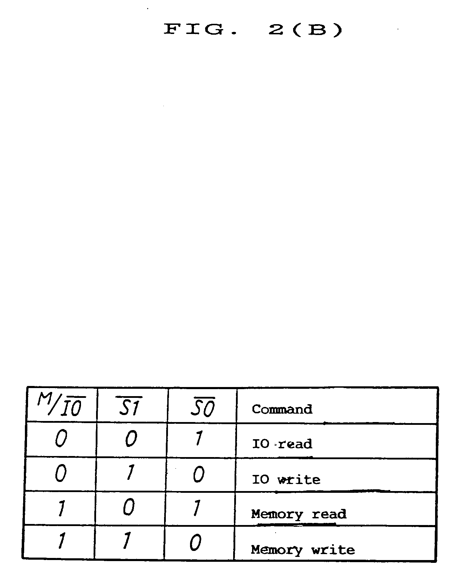

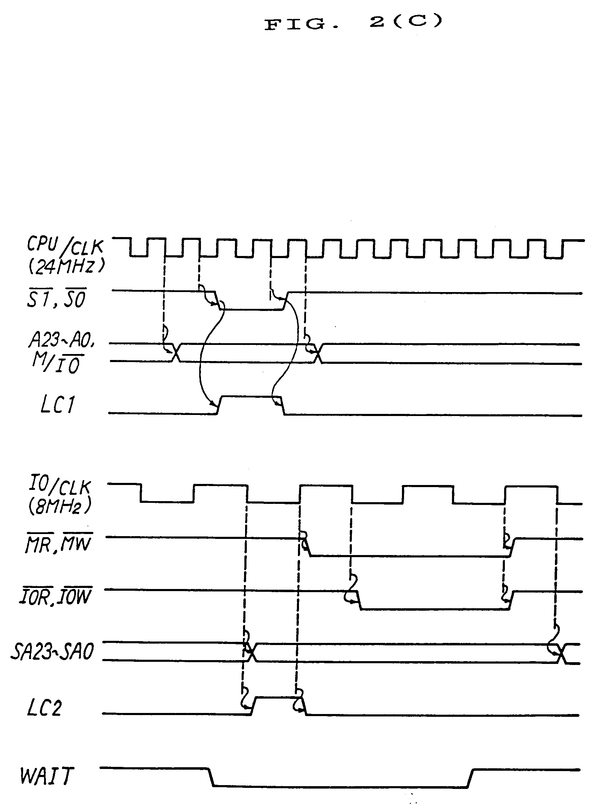

The relationship between the timing converter 108 and a CPU 102 shown in Fig. 1(C) and their operations will be described in detail with reference to Figs. 2(A), 2(B), and 2(C). Fig. 2(A) shows a circuit arrangement of the above relationship. An oscillator (OSC) 151 generates a 24-MHz clock (CPU/CLK), a 3 frequency divider 152 divides the 24-MHz clock to generate a clock (IO/CLK) f_{IO} = 8 MHz. Although an internal operation clock f_{CPU} in the CPU 102 is a 12-MHz clock, a clock signal having a double frequency must be supplied. M/ 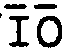 , 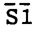 , and 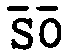 are command signals from the CPU 102 and serve as signals for identifying types of commands to be executed by the CPU 102. A relationship between the signals M/ 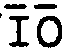 , 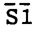 , and 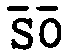 and the commands to be executed by the CPU 102 is shown in Fig. 2(B). A23 to A0 in Fig. 2(A) are address bus bits of the CPU 102. D15 to D0 are data bus bits of the CPU 102. All signals output from the CPU 102 are synchronized with the CPU/CLK f_{CPU} = 24 MHz (Fig. 2(C)).

The timing converter 108 is a circuit for temporarily latching the above signals from the CPU 102 and outputting them in synchronism with the IO/CLK f_{IO} = 8 MHz. Signals such as signals IOW (IO write), IOR (IO read), MW (Memory read), and MR (Memory write) are 8-MHz converted command signals. SD15 to SD0 are 8-MHz converted data bus signal bits. SA23 to SA0 are 8-MHz converted address bus signal bits (Fig. 2(C)). These outputs from the timing converter 108 are connected to the board connector 101 in Fig. 1(C).

The timing converter 108 includes two latch circuits 153 and 154. The latch circuit 153 is operated in accordance with a latch signal LC1 synchronized with a 24-MHz CPU/CLK, and the latch circuit 154 is operated in accordance with a latch signal LC2 synchronized with the 8-MHz IO/CLK. Before data is output from the timing converter 108 to the board connector 101 through the SD15 to SD0, a WAIT signal shown in Fig. 2(C) is sent from the timing converter 108 to the CPU 102 so as not to send the next data from the CPU 102 to the timing converter 108 through the D15 to D0.

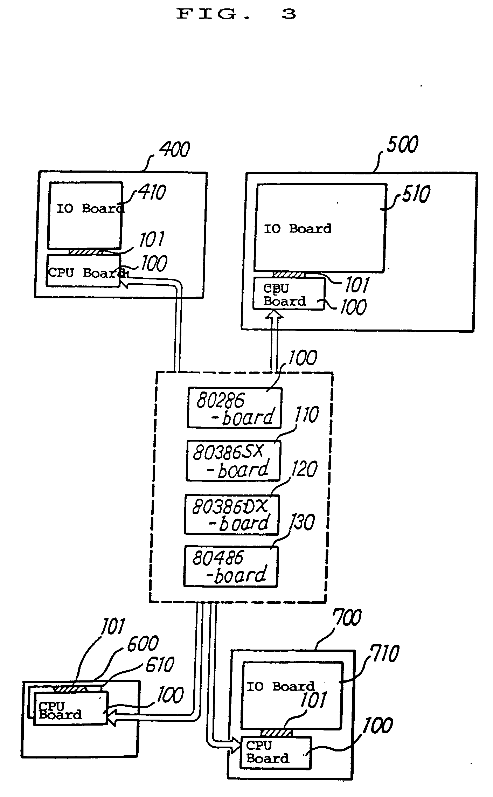

Fig. 3 shows the second embodiment of the present invention. The second embodiment comprises a desktop type personal computer main body 400 stored in a very compact case, an IO board 410 in the personal computer main body 400, a desktop type personal computer main body 500 stored in a relatively large normal case, an IO board 510 in the personal computer main body 500, a note book type personal computer main body 600, and an IO board 610 in the personal computer main body 600. The second embodiment further comprises a relatively large laptop type personal computer main body 700, and an IO board 710 in the personal computer main body 700. Each personal computer has separate CPU and IO boards which are connected through a board connector. At the same time, the CPU boards and the board connectors have compatibility in all the personal computers. Common CPU boards 100 can be used in all the personal computer bodies 400, 500, 600, and 700. Similarly, CPU boards 110, 120, and 130 can be commonly used in all the personal computers. In the system shown in Fig. 3, four CPU boards (100, 110, 120, and 130) and four IO boards (410, 510, 610, and 710) are designed to allow a highly efficient development of 16 types (a total of 16 (= 4 x 4) combinations) of products.

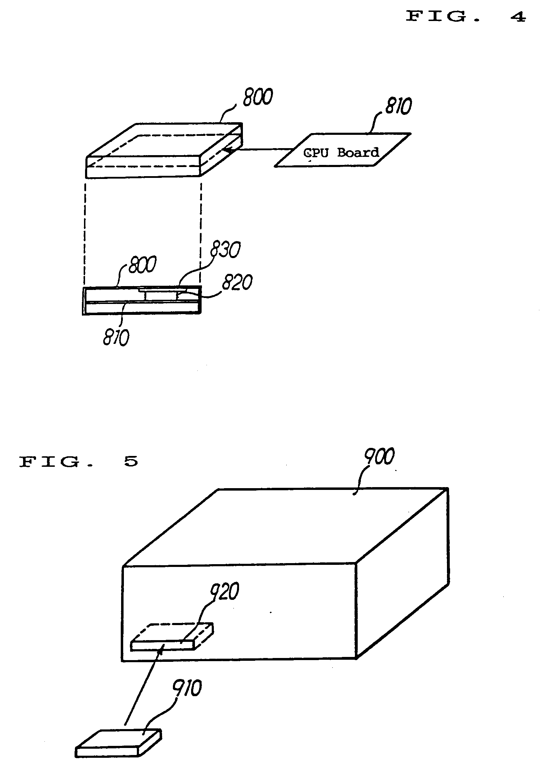

Fig. 4 is a view associated with the third embodiment of the present invention. This embodiment is related to shielding of a CPU board and CPU heat dissipation. A CPU board 810 on which a CPU 820 is mounted is stored in a shield case 800 and is electromagnetically shielded. Most of the circuits mounted on the CPU board 810 are operated in synchronism with a high-speed CPU clock. Electromagnetic noise having a frequency which is an integer multiple of the CPU clock is radiated from a pattern on a board or leads of electronic parts. These electromagnetic noise components are suppressed by the magnetic shield case 800. When a main board is constituted by a single board, as shown in Fig. 6, and is to be entirely shielded, a considerably large shield case is required. In addition, since a large number of connectors are present on a main board 300, it is cumbersome to shield the entire main board. According to the present invention, however, the CPU and IO boards are separately arranged, the CPU board is mainly shielded, and the size of the shield case can be small, thereby shielding the boards at low cost. A heat sink 830 is adhered to the shield case 800 and cooperates with the shield case to dissipate heat from the CPU 820. The shield case 800 may be in direct contact with the CPU 820 to dissipate heat from the CPU.

Fig. 5 shows the fourth embodiment of the present invention which is related to a CPU cartridge. An insertion slot is formed in a personal computer main body 900 to receive a CPU cartridge 910. The CPU cartridge 910 is obtained by storing a CPU board in a case. The CPU cartridge 910 can be externally inserted through the CPU cartridge insertion slot 920 without opening the case of the personal computer main body 900 and can be removed therefrom. When the CPU cartridge 910 is inserted, the CPU cartridge is connected to an IO board in the personal computer 900 through the board connector. When the CPU board is formed into a CPU cartridge, a user can easily obtain a version-up CPU board. For example, insertion of a numerical operation coprocessor into a socket and extension of the extended memory can be facilitated. In addition, a change in BIOS-ROM can be easily performed.

The present invention has been described in detail. The most important characteristic feature of the present invention lies in that the CPU and IO boards are separated, and the division method has a significant meaning. Features of the IO and CPU boards are summarized in Table 1.

**Table 1**

| | CPU Board | IO Board |
|---|---|---|
| Board Area | The area is to be minimized (the number of circuits is to be minimized). | The area is to be maximized (the number of circuits is to be maximized). |
| Function | The version-up is required along with technical developments as of CPUs and memories. | The functions are standardized and are not almost updated even if technical developments are achieved, and the functions can be used commonly in all the models (mainly associated with IO units). |
| | A variety of functions are available in units of models (mainly associated with the CPU memories). | |
| Operation Speed | Almost all the circuits are operated in synchronism with a highspeed CPU clock. | All the circuits are operated in synchronism with low-speed IO clock (6 to 10 MHz). |
| Counter-measure against Electromagnetic Interference | Electromagnetic noise caused by high-speed CPU clock appears in space and is suppressed by a shield unit or the like. | Electromagnetic noise is mainly produced from external connectors (keyboard, mouse, serial interface, and parallel interface). |
| | Signals appearing at the connector are mainly processed. | |

### Industrial Applicability

Effects of the present invention will be summarized as follows.
(1) Effects Obtained by Board Division into CPU and IO Boards
   [a] Reduction of Number of Development Steps and Shortening of Development Time
      Since common parts except for the CPU board can be used, and only the CPU board is designed along with the technical developments, the number of development steps of new products and their developing time can be reduced.
   [b] Reduction of Risk in Products in Stock
      When the products in stock are subjected to disposition (loss), only CPU boards are subjected to disposition. As compared with a conventional case wherein the entire board is subjected to disposition, the amount of loss can be reduced.
   [c] Reduction in Board Cost
      The numbers of IO and CPU boards (two, four, six boards, and the like) can be independently optimized, and the cost of a total set of boards can be reduced. For example, as compared with a case wherein the main board 300 in Fig. 6 is constituted by six boards, if the CPU board 100 in Fig. 1(A) is designed by six boards and the IO board 200 in Fig. 1(A) is designed by four boards, the total cost of the boards can be reduced.
   [d] Shortening of Lead Time
      Components except for the CPU boards are always manufactured in a predetermined quantity, and only the CPU boards are manufactured in accordance with each order, thereby reducing the lead time.
   [e] Reduction in Cost by Using Common Parts
      Since IO boards are common in several types of personal computers, the number of parts on the IO boards can be increased, and the parts can be purchased by manufacturers at low cost. In addition, by use of common parts, the management cost can also be reduced.
   [f] Grade-Up by User
      If a user initially purchases an 80286 CPU board and wishes a grade-up version to an 80386 CPU board, he purchases only an 80386 CPU board, thereby easily obtaining a grade-up version.
   [g] Quality Uniformity (High Quality)
      Since the IO board can be commonly used, a bug or the like found on the old IO board can be solved over time, and quality can be gradually improved over time, and the quality of different models can be uniformed.
   [h] Efficient Systemization
      By systemizing one IO board, costs of several models can be simultaneously reduced, thus resulting in high efficiency.
(2) Effect Obtained by CPU Board Compatibility between Personal Computer Having Different Case Case Size
   [i] Large Reduction in Number of Development Steps (Efficient Development)
      For example, in the case of Fig. 3, 16 types of products can be obtained by the number of development steps corresponding to those of four types of conventional products.
(3) Effect by CPU Board Shielding (Fig. 4)
   [j] Countermeasures against electromagnetic noise can be concentratedly and efficiently performed. In addition, heat dissipation of the CPU can also be facilitated.
(4) Effect by CPU Board Cartridge (Fig. 5) [k] Version-up on the CPU board can be facilitated (e.g., insertion of a numeric operation coprocessor, extension of an extended memory, and a change in BIOS).

## Claims

1. A personal computer having a central processing unit (102), an NPX socket (103) for inserting a numeric operation coprocessor, a ROM (104) for storing a basic input/output program, a RAM (105) functioned as a main memory, an extended memory connector (106) for extending this main memory, a parallel interface (216) to which an external printer can be connected, a serial interface (215) to which an external modem can be connected, a keyboard interface (214) to which an external keyboard can be connected, an FDD interface (212) for controlling a floppy disk drive unit, and an optional connector (214) for inserting an optional board for extending a function, characterized in that
(a) a CPU board (100) including said central processing unit (102), said ROM (104), said RAM (105), said NPX socket (103), and said extended memory connector, and an IO board (200) including said parallel interface (216), said serial interface (215), said keyboard interface (214), said FDD interface, (212) and the optional connector are constituted by separate boards, said CPU board and said IO board are connected through a board connector (101),
(b) said central processing unit (102) on said CPU board, said numeric operation coprocessor inserted into said NPX socket (103), said RAM (105), an extended memory inserted into said extended memory connector (106) are operation in synchronism with a CPU clock,
(c) said parallel interface (216), said serial interface (215), said keyboard interface (214), said FDD interface (212), which interfaces are mounted on said IO board, and said optional board inserted into said optional connector are controlled by an address signal, a data signal, and a control signal which are synchronized with an IO clock having a speed lower than that of the CPU clock, and
(d) said CPU board has a timing converter (108) for converting timings of the address, data, and control signals from said central processing unit, which are output in synchronism with the CPU clock, into address, data, and control signals synchronized with the IO clock, thereby outputting the address, data, and control signals synchronized with the IO clock to said board connector.

2. A personal computer according to claim 1, characterized in that a frequency f_{CPU} of the CPU clock falls within a range of 8 MHz to 50 MHz, and a frequency f_{IO} of the IO clock falls within a range of 6 MHz to 10 MHz, a condition f_{CPU} ≦ f_{IO} being established.

3. A personal computer according to claim 1, characterized in that said personal computer is a personal computer having separate CPU and IO boards, and not less than two CPU boards are prepared in units of CPUs and can be connected and operated through a corresponding one of the IO boards and a corresponding one of the board connectors.

4. A personal computer according to claim 1, characterized in that said CPU board is magnetically shielded by a metal case (900).

5. A personal computer according to claim 1, characterized in that said CPU board is magnetically shielded by a metal case, and said central processing unit on said CPU board is in contact with said metal case.

6. A personal computer according to claim 1, characterized in that said CPU board is magnetically shielded by a plated plastic case or a plastic case containing a magnetic material.

7. A personal computer according to claim 1, characterized in that said CPU board is stored in a metal case or a plastic case to constitute a CPU cartridge which can be externally inserted into a main body case of said personal computer without opening said main body case.

8. A personal computer according to claim 1, characterized in that said CPU board is physically constituted by not less than two boards.

9. A personal computer according to claim 1, characterized in that said IO board is physically constituted by not less than two boards.

10. A personal computer according to claim 1, characterized in that the control signal includes IO write, IO read, memory read, and memory write command signals.
